# EUROPÄISCHE PATENTSCHRIFT

(11) **EP 2 422 867 B1**
(45) Veröffentlichungstag und Bekanntmachung des Hinweises auf die Patenterteilung: **12.10.2016**
(21) Anmeldenummer: 11178365.0
(22) Anmeldetag: 23.08.2011
(51) Int. Cl.: B01D 45/06, B64D 11/02

(54) **Abscheidevorrichtung für Vakuumtoilettensysteme**
Interception device for vacuum toilet systems
Dispositif de séparation pour systèmes de toilettes sous vide

(30) Priorität: 31.08.2010 DE 102010035912; 31.08.2010 US 378555 P
(43) Veröffentlichungstag der Anmeldung: 29.02.2012
(73) Patentinhaber: Airbus Operations GmbH, 21129 Hamburg (DE)
(72) Erfinder: Lutzer, Wilhelm, 23619 Zarpen (DE)
(74) Vertreter: Kopf Westenberger Wachenhausen Patentanwälte PartG mbB

(56) Entgegenhaltungen:
- DE-A1- 4 200 298
- US-A- 4 385 912

## Beschreibung

### GEBIET DER ERFINDUNG

Die Erfindung betrifft die Vakuumtoilettentechnik. Insbesondere betrifft die Erfindung eine Abscheidevorrichtung für ein Vakuumtoilettensystem, ein Vakuumtoilettensystem, ein Verfahren zur Reinigung eines Profilabscheiders in einem Vakuumtoilettensystem und die Verwendung einer Abscheidevorrichtung in einem Flugzeug.

### TECHNOLOGISCHER HINTERGRUND

Bekannte Vakuumtoilettensysteme in Passagierflugzeugen haben in der Verbindungsleitung zwischen dem Abwassertank und der Flugzeugumgebung einen Filter installiert, der verhindert, dass zum Beispiel Aerosole aus dem Abwassertank nach außen getragen werden.

Dabei kommen derzeit Wegwerffilter oder zu reinigende Filter in Betracht. Der Austausch der Wegwerffilter ist mit hohen Kosten für die Airline verbunden, während die Reinigung der Filter lediglich eine unangenehme, bisweilen auch zeitraubende Angelegenheit ist, da es sich in der Regel um Volumenfilter handelt, deren Volumen vom abgefilterten Inhalt befreit werden muss. Beispielsweise müssen Siebfilter aufwendig mit Ultraschall von den darin eingefangenen Partikeln befreit werden. Die Reinigung dieser Filter ist deshalb zeitintensiv und daher mit erheblichen Kosten für den Flugzeugbetreiber verbunden.

Die DE 10 204 248 B4 und die US 6,681,412 B2 beschreiben beispielsweise eine Filtereinrichtung für ein Vakuumtoilettensystem mit einem Filterelement, das als PTFE-Membranfilter ausgebildet ist.

DE 42 00 298 A1 beschreibt eine Prallfläche für Spritznebel-Absauganlagen sowie eine dafür vorgesehene Reinigungseinrichtung.

US 4,385,912 beschreibt einen Separator zum Separieren von Gasen und Flüssigkeit in einem Vakuumtoilettensystem eines Flugzeugs.

### ZUSAMMENFASSUNG DER ERFINDUNG

Es kann als eine Aufgabe der Erfindung betrachtet werden, eine besser zu reinigende Abscheidevorrichtung für ein Vakuumtoilettensystem bereitzustellen.

Es sind eine Abscheidevorrichtung für ein Vakuumtoilettensystem eines Flugzeuges, ein Vakuumtoilettensystem für ein Flugzeug, ein Verfahren zur Reinigung eines Profilabscheiders in einem Vakuumtoilettensystem eines Flugzeuges sowie die Verwendung einer Abscheidevorrichtung in einem Flugzeug gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen die Abscheidevorrichtung, das Vakuumtoilettensystem, das Verfahren und die Verwendung. Beispielsweise lassen sich Merkmale, die im Folgenden im Hinblick auf die Abscheidevorrichtung beschrieben werden, in entsprechender Weise auch als Merkmale in dem Vakuumtoilettensystem und dem Verfahren implementieren, und umgekehrt.

Weiterhin sei angemerkt, dass in jedem der nachgenannten Ausführungsbeispiele der Erfindung Verfahrensschritte neben der explizit genannten Reihenfolge auch in jeder beliebigen anderen Reihenfolge erfolgen können, ohne den Bereich der Erfindung zu verlassen.

Gemäß einem Ausführungsbeispiel der Erfindung ist eine Abscheidevorrichtung für ein Vakuumtoilettensystem eines Flugzeuges angegeben, wobei die Abscheidevorrichtung einen Profilabscheider und eine Abstreifvorrichtung aufweist. Dabei ist der Profilabscheider zur Trennung von gasförmigen und nicht-gasförmigen Bestandteilen eines Toilettenabwassers im Flugzeug ausgeführt und die Abscheidevorrichtung ist derart ausgeführt, dass eine Relativbewegung zwischen dem Profilabscheider und der Abstreifvorrichtung ermöglicht wird. Weiterhin ist die Abscheidevorrichtung derart ausgeführt, dass durch eine Ausführung der Relativbewegung der Profilabscheider durch die Abstreifvorrichtung von an dem Profilabscheider abgelagerten nicht-gasförmigen Bestandteilen befreit wird.

Mit diesem Ausführungsbeispiel ist es möglich, die Reinigung des Profilabscheiders, der als Filter in dem Vakuumtoilettensystem dient, in seiner Einbauposition an einem Abwassersammeltank durchzuführen. Mit anderen Worten muss der Profilabscheider nicht ausgebaut und zerlegt werden, um ihn zu reinigen. Lediglich die Ausführung und Durchführung der Relativbewegung führt dazu, dass der Profilabscheider den gewünschten sauberen Zustand erreicht.

Dabei kann die Abstreifvorrichtung beispielsweise rein mechanisch sein und als Mitnehmer, oder auch als entsprechende Negativform beziehungsweise Matrize des Profilabscheiders ausgestaltet sein, so dass die am Profilabscheider abgelagerten Bestandteile von diesem entfernt werden.

Jedoch ist es auch möglich, dass die Abstreifvorrichtung elektrische Komponenten aufweist, so dass die gewünschte Relativbewegung elektrisch gesteuert und/oder geregelt werden kann.

Mit anderen Worten sind der Profilabscheider und die Abscheidevorrichtung derart miteinander in mechanischen Eingriff gebracht, dass bei Durchführung der Relativbewegung der Profilabscheider gereinigt wird und die Bestandteile mechanisch von den Oberflächen des Profilabscheiders von der Abstreifvorrichtung entfernt werden.

Unter dem Begriff Relativbewegung kann dabei nicht nur eine lineare Bewegung, sondern auch eine Rotationsbewegung oder eine Kombination aus diesen beiden Bewegungen verstanden werden.

Damit ist es möglich, den Profilabscheider in kürzester Zeit zu reinigen, ohne dass die Abscheidevorrichtung von beispielsweise dem Abwassersammeltank eines Vakuumtoilettensystems im Flugzeug entfernt werden muss.

Dadurch wird eine erhebliche Reduzierung des Wartungsaufwandes erreicht, sowie eine vollständige Eliminierung des Wegwerffilters. Mit anderen Worten ist diese Abscheidevorrichtung umweltfreundlicher als bisherige.

Mit Hilfe des Profilabscheiders kann die Abtrennung von verschiedenen Stoffen, beispielsweise von Aerosolen, durch mehrfache Umlenkung der Strömung in einem Profillabyrinth aufgrund der Trägheit der nicht-gasförmigen Bestandteile der Strömung erfolgen. Die nicht-gasförmigen Bestandteile können den starken Umlenkungen nicht folgen und werden früher oder später auf eine Wand treffen, an der sie auf der Oberfläche beispielsweise aufgrund ihrer Klebrigkeit haften bleiben.

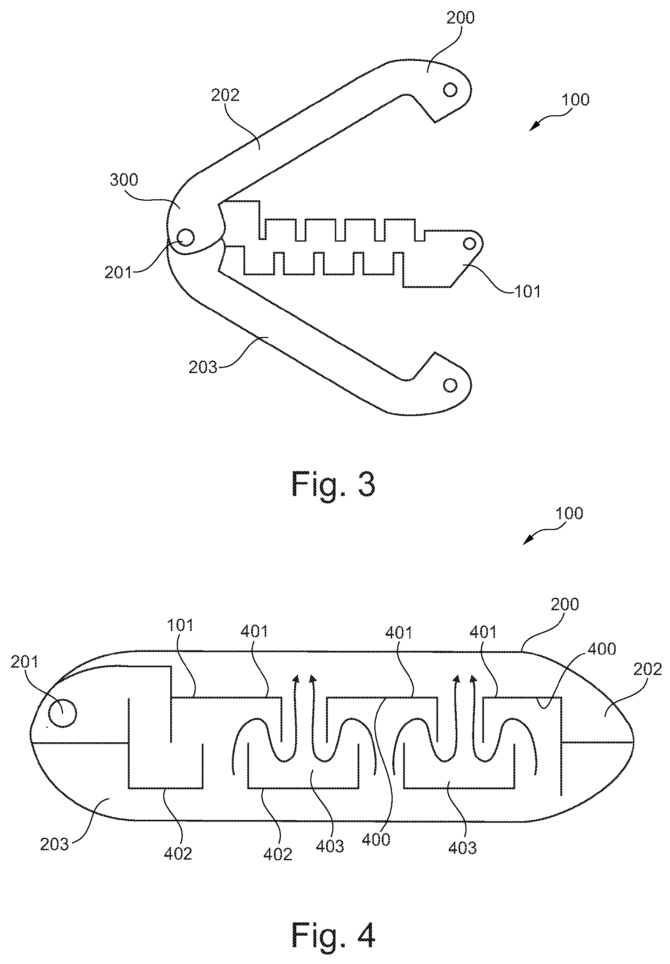

Beispielsweise kann der Profilabscheider als eine Anordnung ausgeführt sein, bei der in einem gewissen Abstand nebeneinander liegende U-Profile ausgeführt sind, deren freie Schenkel nach oben zeigen. Diesen gegenüber kann beispielsweise eine ähnliche oder gleiche Anordnung von U-Profilen angeordnet sein, deren freie Schenkel beispielsweise nach unten zeigen. Die Profile sind so gegeneinander versetzt, dass jeweils über einem Zwischenraum der unten liegenden Profile ein oben liegendes Profil angeordnet ist, wobei die freien Schenkel der Profile in die Öffnung des gegenüberliegenden Profils hineinragen. Dadurch ergibt sich ein Strömungskanal, wie beispielsweise in Fig. 4 dargestellt ist.

Mit anderen Worten ist der Profilabscheider ein Schikanenabscheider. Um dies enthaltene Barriere zu überwinden, wird die Strömung zweimal um ca. 180° umgelenkt. Die Partikel, die dieser starken Umlenkung nicht folgen können, bleiben auf der Innenseite der U-Profile hängen. Dies sind die abgelagerten, nicht-gasförmigen Bestandteile des Toilettenabwassers.

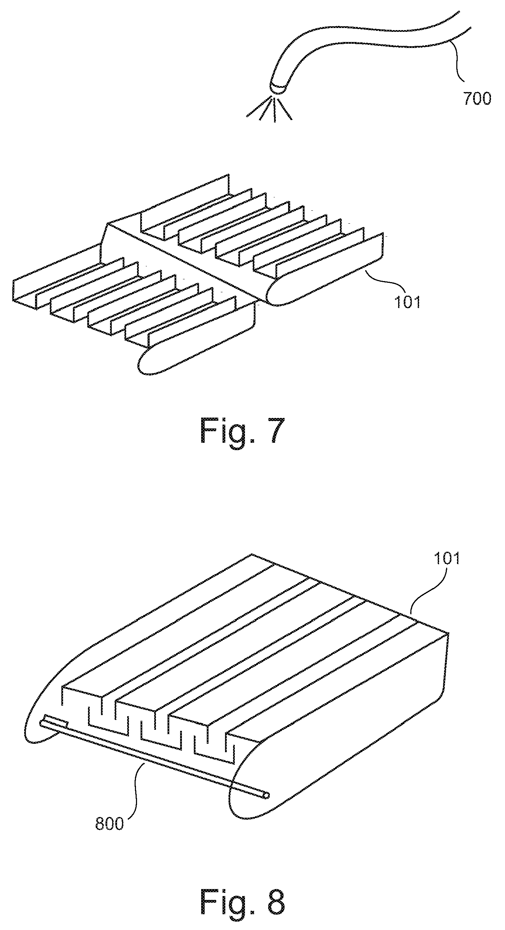

Dabei ist die Bezeichnung U-Profil hier nur zur Veranschaulichung des Prinzips gewählt, analoge Anordnungen sind mit einer Vielzahl anderer Profiltypen ebenfalls möglich. Dabei sind beispielsweise verschiedene Profiltypen in den Fig. 7, 9 und 10 gezeigt.

Aufgrund der vorhandenen Abstreifvorrichtung muss der Profilabscheider nun nicht mehr aufwendig auseinander gebaut werden, sondern es ist gemäß diesem Ausführungsbeispiel der Erfindung möglich, lediglich die Relativbewegung auszuführen, wodurch der Profilabscheider von den abgelagerten nicht-gasförmigen Bestandteilen des Toilettenabwassers befreit also gereinigt wird.

Beispielsweise ist es möglich, den Profilabscheider durch eine genau passende Matrize zu schieben. Diese Matrize kann beispielsweise ein Teil des Gehäuses der Abscheidevorrichtung sein oder kann auch ein demontierbares separates Bauteil sein.

Mit anderen Worten wird der Profilabscheider von einer Arbeitsposition relativ zu der Abstreifvorrichtung in eine Reinigungsposition gebracht, wobei auf dem Weg zwischen diesen beiden Positionen der mechanische Eingriff zwischen dem Profilabscheider und der Abstreifvorrichtung die abgelagerten und zu entfernenden Bestandteile des Toilettenabwassers von dem Profilabscheider entfernt.

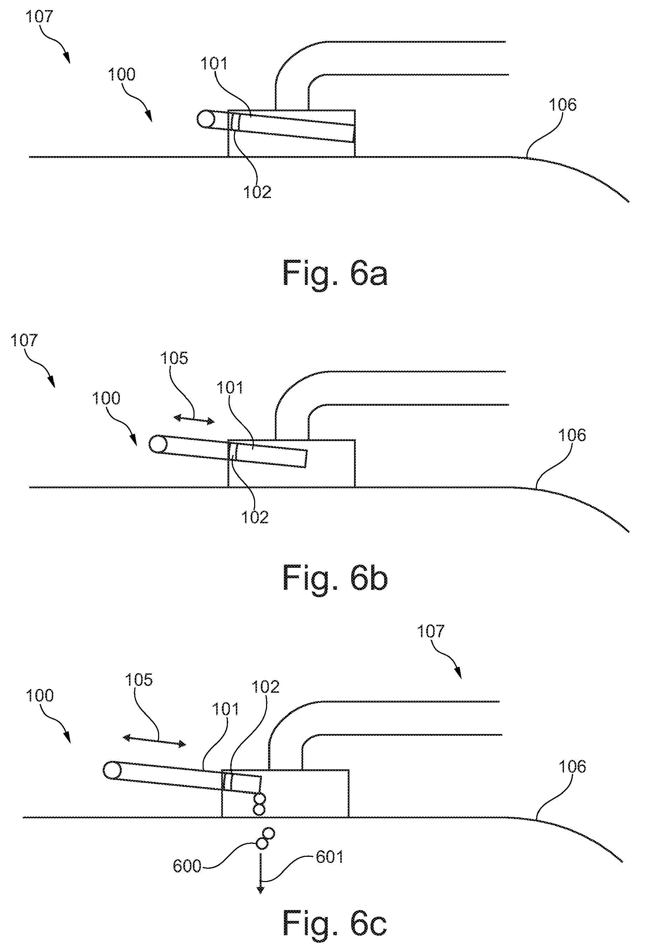

Dabei kann die Relativbewegung beispielsweise dadurch realisiert sein, dass die Abstreifvorrichtung fest an beispielsweise dem Gehäuse der Abscheidevorrichtung angebracht ist und der Profilabscheider entlang einer Geraden innerhalb des Gehäuses der Abscheidevorrichtung bewegbar ist. In diesem Fall kann der Profilabscheider aus der Arbeitsposition entlang dieser Achse herausgezogen werden und anschließend wieder zurück in seine Arbeitsposition hineingeschoben werden. Diese Bewegung ist beispielsweise in den Fig. 6a-6c dargestellt.

Weiterhin ist es möglich, dass die Abstreifvorrichtung und auch der Profilabscheider beweglich an der Abscheidevorrichtung angeordnet sind, beispielsweise an einem Gehäuse und dennoch zueinander eine Relativbewegung ausführen können.

Weiterhin ist es möglich, dass die Abstreifvorrichtung beweglich angeordnet ist und der Profilabscheider ist fest an der Abscheidevorrichtung angebracht.

Beispielsweise kann der Profilabscheider aus mehreren oberen Profilen und gegenüberliegenden unteren Profilen ausgeführt sein und die Abstreifvorrichtung ist als passende Matrize, also als Negativform der sich ergebenden Reliefs ausgeführt. Zum Reinigen der Profile werden sie bis zu ihrem Ende in die Matrize gezogen, wobei die angesammelten Partikel aus den Profilen entfernt werden, und in dem hier beschriebenen Anwendungsfall in den Abwassersammeltank fallen, aus dem sie bei der nächsten Entleerung des Tanks mit entsorgt werden. Dieses Verfahren, das an diesem Ausführungsbeispiel der Erfindung durchgeführt werden kann, ist in den Fig. 6a-6c deutlich gezeigt.

Dabei ist in diesem und jedem anderen Ausführungsbeispiel die Abscheidevorrichtung derart ausgeführt, dass sie den auftretenden Druckunterschieden innerhalb einer Flugzeug-Vakuumtoilette mechanisch standhält.

Die Abstreifvorrichtung kann beispielsweise aus Kunststoff, Metall oder auch Elastomer hergestellt sein. Auch andere Materialen zur Herstellung sind möglich.

Dabei kann es als wichtigen Aspekt der Erfindung angesehen werden, dass es die Abstreifvorrichtung eng an den Profilen des Profilabscheiders bzw. am Profilabscheider anliegt und somit möglichst viel Schmutz abstreifen kann. Jedoch kann ein optimaler Abstand dahin gehend ausgeführt sein, dass nicht während des Abstreifvorgangs eine Verklemmung zwischen dem Profilabscheider und der Abstreifvorrichtung auftritt.

Weiterhin kann durch die vorliegende Erfindung eine geringere Einbauhöhe für Abwassersammeltanks erreicht werden. Die erforderliche Höhe kann beispielsweise mittels der vorliegenden Erfindung deshalb verringert werden, weil durch die vereinfachte Reinigung weder Platz zum Montieren und/oder Demontieren von Teilen nötig ist. Somit ist mittels der vorliegenden Erfindung ein wirtschaftlich nutzbarer Raumgewinn im Flugzeug verbunden.

Gemäß einem weiteren Ausführungsbeispiel der Erfindung weist der Profilabscheider Ablagerungsbereiche zur Ablagerung von den nicht-gasförmigen Bestandteilen auf, wobei die Abstreifvorrichtung zumindest einen Mitnehmer aufweist. Weiterhin ist während der Relativbewegung ein mechanischer Kontakt zwischen dem Mitnehmer und den Ablagerungsbereichen des Profilabscheiders zur Befreiung des Profilabscheiders von abgelagerten Bestandteilen hergestellt.

Mit anderen Worten wird durch die beiden Komponenten Profilabscheider und Abstreifvorrichtung gewährleistet, dass ein mechanischer Eingriff bzw. ein mechanischer Kontakt untereinander besteht, so dass bei der Relativbewegung die unerwünschten abgelagerten Bestandteile von dem Profilabscheider mechanisch entfernt werden.

Gemäß einem weiteren Ausführungsbeispiel der Erfindung ist die Abstreifvorrichtung in ihrer Form als Matrize bezüglich des Profilabscheiders ausgeführt.

Mit anderen Worten ist ein mechanischer Eingriff zwischen dem Profilabscheider und der Abstreifvorrichtung hergestellt, so dass ein direkter Kontakt von dem Profilabscheider und der Abstreifvorrichtung besteht, die ähnlich wie eine Positiv- und Negativform miteinander in Verbindung stehen.

Mit anderen Worten ist die äußere Form der Abstreifvorrichtung an die Form des Profilabscheiders oder auch an das durch den Profilabscheider gebildete Relief bzw. an den Strömungskanal innerhalb des Profilabscheiders angepasst.

Gemäß einem weiteren Ausführungsbeispiel der Erfindung weist die Abscheidevorrichtung ein Gehäuse auf, wobei der Profilabscheider und die Abstreifvorrichtung in dem Gehäuse angeordnet sind.

Beispielsweise kann dieses Gehäuse zur Anbindung an den Abwassersammeltank des Vakuumtoilettensystems im Flugzeug dienen. Beispielsweise ist es möglich, den Profilabscheider bzw. die Matrize als Teil dieses Gehäuses auszuführen. In diesem Fall kann der Profilabscheider sowohl zu dem Gehäuse als auch zur Matrize bzw. zur Abstreifvorrichtung bewegt werden.

Gemäß einem weiteren Ausführungsbeispiel der Erfindung ist die Abstreifvorrichtung Teil des Gehäuses der Abscheidevorrichtung oder ist fest mit dem Gehäuse der Abscheidevorrichtung verbunden, wobei der Profilabscheider verschiebbar gegenüber dem Gehäuse und der Abstreifvorrichtung zur Ausführung der Relativbewegung angeordnet ist.

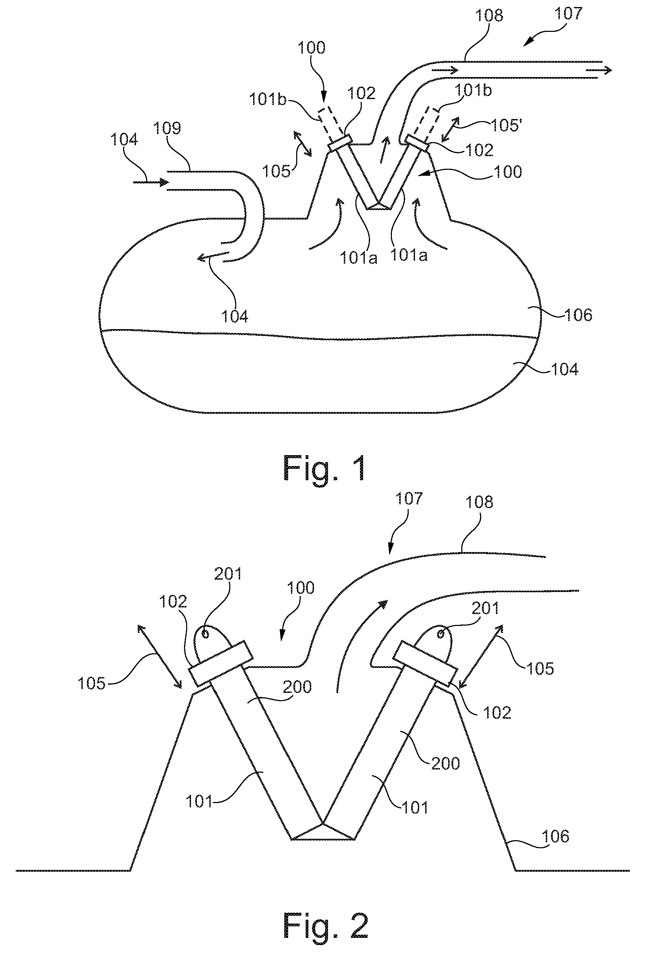

Dieses Ausführungsbeispiel, welches anhand der Fig. 1 und 6a-6c nachvollzogen werden kann, ermöglicht es, den Profilabscheider sehr schnell zu reinigen und lediglich die folgende Bewegung durchzuführen: Herausziehen aus und Hineinschieben des Profilabscheiders in die Abstreifvorrichtung bzw. die Matrize. Dadurch wird eine erhebliche Reduzierung des Wartungsaufwandes erreicht, sowie eine vollständige Eliminierung des Wegwerffilters. Mit anderen Worten ist diese Abscheidevorrichtung umweltfreundlicher als bisherige.

Dabei kann in diesem und auch in anderen Ausführungsbeispielen eine Sicherungseinrichtung verwendet werden, um die Abscheidevorrichtung zu sichern.

Gemäß einem weiteren Ausführungsbeispiel weist der Profilabscheider ein Profiloberteil mit zumindest einer reliefartigen Oberfläche auf und der Profilabscheider weist ein Profilunterteil mit zumindest einer reliefartigen Oberfläche auf und wobei das Profiloberteil und das Profilunterteil derart zusammengefügt sind, dass zumindest ein reliefartiger Strömungskanal bereitgestellt wird.

Weiterhin ist es selbstverständlich möglich, dass der Profilabscheider mehrere Profiloberteile und mehrere Profilunterteile aufweist. Dies ist beispielsweise deutlich der Fig. 4 zu entnehmen, in der drei U-förmige obere Profiloberteile verwendet werden und vier U-förmige untere Profilunterteile verwendet werden. Dadurch bildet sich der Strömungskanal 403.

Mit anderen Worten ist die hier beschriebene Abscheidevorrichtung eine Anordnung aus mit einem gewissen Abstand nebeneinander liegenden U-Profilen, deren freie Schenkel zum Beispiel nach unten zeigen. Diese stellen mehrere Profiloberteile dar. Diesen gegenüber liegt eine ähnliche oder gleiche Anordnung von U-Profilen, die mehrere Profilunterteile darstellen. Deren freie Schenkel zeigen nach oben.

Dabei können die Profiloberteile und die Profilunterteile so gegeneinander versetzt sein, dass jeweils über einem Zwischenraum eines Profilunterteils ein Profiloberteil angeordnet ist, wobei die freien Schenkel der Profilunterteile in die Öffnungen der gegenüberliegenden Profiloberteile hineinragen.

Um diese Barriere zu überwinden, wird die Strömung zweimal quasi um 180° umgelenkt. Die Partikel, die in dieser starken Umlenkung nicht folgen können, bleiben auf der Innenseite der U-Profile hängen. Diese können anschließend durch die erfindungsgemäße Abscheidevorrichtung von dem Profilabscheider entfernt werden. Dies erfolgt durch beispielsweise Herausziehen des Profilabscheiders aus seiner Arbeitsposition gegenüber der Abstreifvorrichtung.

Gemäß einem weiteren Ausführungsbeispiel sind das Profiloberteil und das Profilunterteil nur an einem Ende gehaltert und an dem gegenüberliegenden Ende frei, wobei das Profiloberteil und das Profilunterteil an dem einen Ende durch eine Drehachse verbunden sind, wodurch das Profiloberteil und das Profilunterteil auf- und zuklappbar angeordnet sind.

Die Aufklappbarkeit ermöglicht eine zusätzliche Reinigung des Profilabscheiders.

Gemäß einem weiteren Ausführungsbeispiel der Erfindung ist die Abscheidevorrichtung derart ausgeführt, dass das Profiloberteil und das Profilunterteil mit ihrem freien Ende durch die Abstreifvorrichtung ziehbar sind, wodurch die Relativbewegung ausführbar ist.

Dieses Ausführungsbeispiel kann weiterhin ein Gehäuse der Abscheidevorrichtung bereitstellen, welches fest mit einem Abwassersammeltank verbunden ist.

Gemäß einem weiteren Ausführungsbeispiel der Erfindung weist die Abscheidevorrichtung einen Handgriff auf, wobei die Abscheidevorrichtung derart ausgeführt ist, dass durch ein Ziehen an dem Handgriff die Relativbewegung zwischen dem Profilabscheider und der Abstreifvorrichtung ausführbar ist.

Weiterhin ist es möglich, dass dieser Handgriff gleichzeitig als Drehachse für einen oberen Teil des Gehäuses der Abscheidevorrichtung und einen unteren Teil des Gehäuses der Abscheidevorrichtung fungiert. Dieses Ausführungsbeispiel kann zum Beispiel der Fig. 8 entnommen werden.

Gemäß einem weiteren Ausführungsbeispiel der Erfindung ist ein Vakuumtoilettensystem für Flugzeuge angegeben, welches eine Abscheidevorrichtung gemäß einem der vorangegangenen oder nachfolgend beschriebenen Ausführungsbeispiele aufweist. Weiterhin weist das Vakuumtoilettensystem einen Abwassersammeltank auf, wobei die Abscheidevorrichtung fest an einem Gehäuse des Abwassersammeltanks angebracht ist und wobei der Profilabscheider verschiebbar innerhalb der Abscheidevorrichtung angeordnet ist.

Gemäß einem weiteren Ausführungsbeispiel der Erfindung ist der Profilabscheider mittels einer Schnellsicherungsfeder gegen unbeabsichtigte Bewegung gesichert.

Für den Betrieb kann es erforderlich sein, dass der Profilabscheider gesichert ist, weil er nicht hin- und herrutschen können soll. Beispielsweise kann dies auch mit einer Schraube realisiert werden, aber um den Zeitaufwand zu der Reinigung zu verkürzen, wird dies erfindungsgemäß mit einer Schnellsicherungsfeder gelöst. Dadurch werden erneut Wartungszeiten verkürzt.

Gemäß einem weiteren Ausführungsbeispiel der Erfindung ist ein Verfahren zur Reinigung eines Profilabscheiders in einem Vakuumtoilettensystem eines Flugzeugs angegeben, wobei das Verfahren die folgenden Schritte aufweist: Bereitstellen eines Profilabscheiders an einem Abwassersammeltank eines Vakuumtoilettensystems in einem Flugzeug, wobei der Profilabscheider zur Trennung von gasförmigen und nicht-gasförmigen Bestandteilen eines Toilettenabwassers im Flugzeug ausgeführt ist, Bereitstellen einer Abstreifvorrichtung, Verursachen einer Relativbewegung zwischen dem Profilabscheider und der Abstreifvorrichtung in Einbauposition des Profilabscheiders und der Abstreifvorrichtung, wodurch der Profilabscheider durch die Abstreifvorrichtung von an dem Profilabscheider abgelagerten nicht-gasförmigen Bestandteilen befreit wird.

Gemäß einem weiteren Ausführungsbeispiel der Erfindung ist der Verfahrensschritt des Verursachens der Relativbewegung durch die folgenden Schritte realisiert: Herausziehen des Profilabscheiders aus dem Abwassersammeltank, gleichzeitiges Abstreifen von abgelagerten nicht-gasförmigen Bestandteilen von dem Profilabscheider durch mechanischen Kontakt zwischen dem Profilabscheider und der Abstreifvorrichtung sowie Hineinschieben des Profilabscheiders in den Abwassersammeltank.

Mit diesem Ausführungsbeispiel ist es möglich, die Reinigung des Profilabscheiders, der als Filter in dem Vakuumtoilettensystem dient, in seiner Einbauposition zu reinigen. Mit anderen Worten muss der Profilabscheider nicht ausgebaut und zerlegt werden, um ihn zu reinigen. Lediglich die Ausführung und Durchführung der Relativbewegung führt dazu, dass der Profilabscheider den gewünschten sauberen Zustand erreicht.

Als weitere Schritte können beispielsweise das Entsichern der Abscheidevorrichtung hinzukommen. Nach dem Hineinschieben des Profilabscheiders kann als weiterer Schritt das Sichern der Abscheidevorrichtung hinzukommen.

Gemäß einem weiteren Ausführungsbeispiel der Erfindung ist die Verwendung einer Abscheidevorrichtung in einem Flugzeug gemäß einem der vorangegangenen oder folgenden Ausführungsbeispiele angegeben.

Im Folgenden werden mit Verweis auf die Figuren Ausführungsbeispiele der Erfindung beschrieben.

### KURZE BESCHREIBUNG DER FIGUREN

Fig. 1 zeigt eine schematische, zweidimensionale Darstellung eines Abwassersammeltanks mit einer Abscheidevorrichtung gemäß einem Ausführungsbeispiel der Erfindung.
Fig. 2 zeigt eine schematische, zweidimensionale Darstellung einer Abscheidevorrichtung gemäß einem Ausführungsbeispiel der Erfindung.
Fig. 3-5 zeigen schematische, zweidimensionale Darstellungen von Profilabscheidern, die Teil einer Abscheidevorrichtung gemäß einem Ausführungsbeispiel der Erfindung sind.
Fig. 6a-6c zeigen eine schematische, zweidimensionale Darstellung einer Abscheidevorrichtung gemäß einem Ausführungsbeispiel der Erfindung.
Fig. 7-10 zeigen schematische, zweidimensionale Darstellungen verschiedener Profilabscheider, die Teil einer Abscheidevorrichtung gemäß einem Ausführungsbeispiel der Erfindung sind.
Fig. 11 zeigt eine schematische, zweidimensionale Darstellung einer Abscheidevorrichtung gemäß einem Ausführungsbeispiel der Erfindung.
Fig. 12 zeigt eine schematische, zweidimensionale Darstellung eines Vergleichs zwischen einem Abwassersammeltank gemäß dem Stand der Technik mit einem Abwassersammeltank mit einer Abscheidevorrichtung gemäß einem Ausführungsbeispiel der Erfindung.
Fig. 13 zeigt eine schematische, zweidimensionale Darstellung eines Flugzeuges mit einem Vakuumtoilettensystem gemäß einem Ausführungsbeispiel der Erfindung.
Fig. 14 und 15 zeigen verschiedene Flussdiagramme von Verfahren gemäß Ausführungsbeispielen der Erfindung.

### DETAILLIERTE BESCHREIBUNG VON AUSFÜHRUNGSBEISPIELEN

Die Darstellungen in den Figuren sind schematisch und nicht maßstäblich.

In der folgenden Figurenbeschreibung werden für die gleichen oder ähnlichen Elemente die gleichen Bezugsziffern verwendet.

Fig. 1 zeigt ein Vakuumtoilettensystem 107 für ein Vakuumtoilettensystem in Flugzeugen, wobei das Vakuumtoilettensystem eine Abscheidevorrichtung 100 und einen Abwassersammeltank 106 aufweist. Die Abscheidevorrichtung weist weiterhin zwei Profilabscheider 101 auf, die jeweils mit durchgezogenen Linien in der Arbeitsposition 101a dargestellt sind und mit gestrichelten Linien in der Reinigungsposition 101b gezeigt sind. Dabei ist es natürlich grundsätzlich auch möglich, lediglich einen Profilabscheider 101 zu verwenden.

Weiterhin weist die Abscheidevorrichtung pro Profilabscheider eine Abstreifvorrichtung 102 auf. Dabei ist der Profilabscheider zur Trennung von gasförmigen und nicht-gasförmigen Bestandteilen eines Toilettenabwassers 104 im Flugzeug ausgeführt. Dieses Toilettenabwasser 104 wird durch Zuleitungen 109 von der Vakuumtoilette zu dem Abwassersammeltank transportiert. Nach der Trennung von gasförmigen und nicht-gasförmigen Bestandteilen innerhalb des Profilabscheiders kann Luft aus dem Abwassersammeltank 106 durch Ableitungen 108 beispielsweise zur Flugzeughaut geleitet werden.

Dabei ist in diesem und jedem anderen Ausführungsbeispiel die Abscheidevorrichtung ausgeführt, um den auftretenden Druckunterschieden innerhalb einer Flugzeug-Vakuumtoilette mechanisch standzuhalten.

Weiterhin ist die Abscheidevorrichtung 100 derart ausgeführt, dass eine Relativbewegung, die hier symbolisch durch die Pfeile 105 und 105' gezeigt ist, zwischen dem Profilabscheider und der Abstreifvorrichtung ermöglicht wird. In dem hier gezeigten Ausführungsbeispiel der Erfindung ist die Relativbewegung eine translatorische Bewegung des Profilabscheiders 101 gegenüber der am Abwassersammeltank fest montierten Abstreifvorrichtung 102.

Weiterhin ist die Abscheidevorrichtung derart ausgeführt, dass bei Ausführung der Relativbewegung, also bei einem Herausziehen des Profilabscheiders von der Arbeitsposition 101a in die Reinigungsposition 101b der Profilabscheider durch die Abstreifvorrichtung von an dem Profilabscheider abgelagerten nicht-gasförmigen Bestandteilen befreit wird.

Mit anderen Worten sind die Abstreifvorrichtung 102 und der Profilabscheider 101 derart miteinander in mechanischen Eingriff gebracht, dass bei der Ausführung der Relativbewegung die Ablagerungen auf dem Profilabscheider entfernt werden und diese beispielsweise in den Abwassersammeltank 106 durch Gravitation hineinfallen.

Insgesamt wird dadurch die Abtrennung von festen und flüssigen Materialien im Abwassertank dahingehend verbessert, dass der Profilabscheider in kürzester Zeit zu reinigen ist. Dabei können verschiedenartige Profile in dem Profilabscheider zur Ablagerung der nicht-gasförmigen Bestandteile zum Einsatz kommen, wobei die Profile durch die Abstreifvorrichtung gezogen werden können, damit das abgelagerte Abscheidegut abgestreift wird und in den Abwassertank fällt.

Mit anderen Worten ist die Abscheidevorrichtung gemäß diesem Ausführungsbeispiel der Erfindung wesentlich einfacher und schneller zu reinigen, da es lediglich ein Herausziehen des Profilabscheiders und ein anschließendes Hineinschieben des Profilabscheiders in die Abstreifvorrichtung bedarf. Dadurch wird eine erhebliche Reduzierung des Wartungsaufwandes erreicht, sowie eine vollständige Eliminierung des Wegwerffilters kann erzielt werden.

Fig. 2 zeigt eine weitere Abscheidevorrichtung 100 gemäß einem weiteren Ausführungsbeispiel der Erfindung. Die Abscheidevorrichtung bildet mit dem Abwassertank 106 ein Vakuumtoilettensystem 107.

Die Abscheidevorrichtung 100 in Fig. 2 weist weiterhin ein Gehäuse 200 auf, welches beispielsweise den Profilabscheider 101 enthält. Weiterhin weist die Abscheidevorrichtung die Abstreifvorrichtung 102 auf, so dass bei einem Herausziehen des Profilabscheiders 101 die gewünschte Reinigung durch den mechanischen Eingriff zwischen Profilabscheider und der Abstreifvorrichtung erreicht wird. Dabei ist das Herausziehen hier als Beispiel der Relativbewegung 105 genannt, die symbolisch durch den Pfeil 105 dargestellt ist.

Weiterhin ist in Fig. 2 gezeigt, dass mittels einer Drehachse 201 ein Profiloberteil und ein Profilunterteil des Profilabscheiders 101 verbunden sind. Diese Mechanik kann den folgenden Fig. 3 und 4 detaillierter entnommen werden.

Fig. 3 zeigt eine Abscheidevorrichtung 100 mit einem Profilabscheider 101 und einem Gehäuse 200. Dabei ist die Abstreifvorrichtung, welche die Abscheidevorrichtung gemäß jedem Ausführungsbeispiel aufweist hier nicht gezeigt.
Weiterhin ist das Gehäuse 200 mit einem Gehäuseoberteil 202 und einem Gehäuseunterteil 203 gezeigt, so dass das Gehäuse insgesamt auf- und zuklappbar ist. Sowohl die beiden Gehäuseteile 202 und 203 sowie auch der Profilabscheider 101 sind über die Drehachse 201 verbunden. Dabei ist zu sehen, dass der Profilabscheider nur an einem Ende 300 gehaltert ist und am gegenüberliegenden Ende frei ist. Beispielsweise kann der Profilabscheider 101 aus einem Profiloberteil und einem Profilunterteil bestehen. Dies kann detaillierter der Fig. 4 entnommen werden.

Fig. 4 zeigt eine Abscheidevorrichtung 100, bei der jedoch die Abstreifvorrichtung 102 nicht gezeigt ist. Die Abstreifvorrichtung könnte beispielsweise den nicht ausgefüllten Bereichen des Strömungskanals 403 entsprechen und an den Innenwandungen der Profile derart anliegen, dass sie bei der Relativbewegung die Ablagerungen mechanisch von den Ablagerungsbereichen 400 entfernen.

In Fig. 4 ist zu sehen, dass der Profilabscheider 101 innerhalb eines Gehäuses 200 in seiner Drehachse 201 gehalten wird. Das Gehäuse wiederum besteht aus einem oberen Gehäuseteil 202 und einem unteren Gehäuseteil 203. Weiterhin weist der Profilabscheider Ablagerungsbereiche 400 zur Ablagerung von den nicht-gasförmigen Bestandteilen auf, wobei diese Ablagerungsbereiche mittels der erfindungsgemäßen Abstreifvorrichtung durch Ausführung der Relativbewegung gereinigt werden.

Dabei ist in diesem Ausführungsbeispiel der Abscheidevorrichtung der Profilabscheider mit mehreren Profiloberteilen 401 und mehreren Profilunterteilen 402 gezeigt. Dabei weisen sowohl die Profiloberteile als auch die Profilunterteile zumindest eine reliefartige Oberfläche auf. In dem hier gezeigten Ausführungsbeispiel handelt es sich um U-förmige Profilober- und Profilunterteile. Diese Profiloberteile und Profilunterteile sind in dem Profilabscheider derart zusammengefügt, dass zumindest ein reliefartiger Strömungskanal 403 bereitgestellt wird.

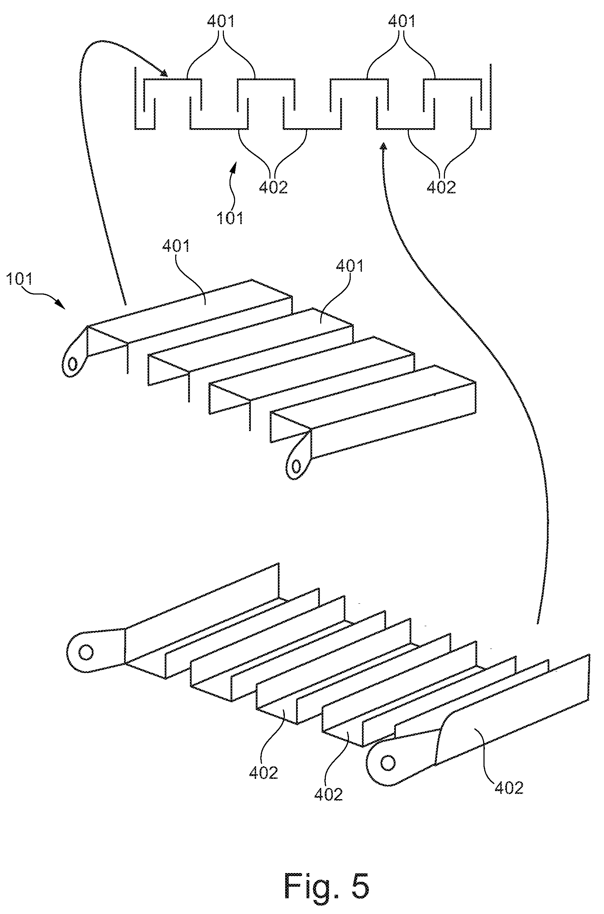

In Fig. 5 ist ein weiterer Profilabscheider 101 gezeigt, der aus mehreren Profiloberteilen 401 besteht und aus mehreren Profilunterteilen 402. Im oberen rechten Teil der Fig. 5 ist ein Querschnitt des gezeigten Profilabscheiders 101 dargestellt.

Die Fig. 6a-6c zeigen ein Vakuumtoilettensystem 107 mit einem Abwassertank 106 und einer Abscheidevorrichtung 100 gemäß einem weiteren Ausführungsbeispiel der Erfindung. Dabei ist in den drei aufeinanderfolgenden Figuren die Abscheidevorrichtung 100 in einer zeitlichen Reihenfolge während der Ausführung der Relativbewegung 105 dargestellt.

Dabei wird in diesem Ausführungsbeispiel der Profilabscheider 101 aus seiner mechanischen Halterung beispielsweise per Hand oder auch automatisch herausgezogen, wodurch die hier nicht gezeigten Ablagerungsbereiche durch mechanischen Kontakt mit der Abstreifvorrichtung 102 gereinigt werden. Das anfängliche Herausziehen ist in Fig. 6b gezeigt, wobei die Endposition des Profilabscheiders in Fig. 6c gezeigt ist, welche Position auch als Reinigungsposition bezeichnet wird. Dabei ist gezeigt, dass die nicht-gasförmigen Bestandteile 600, die zuvor in dem Profilabscheider abgelagert waren, mittels Gravitationskraft in den Abwassertank 106 fallen.

Fig. 7 zeigt einen Profilabscheider 101, der in einem aufgeklappten Zustand falls gewünscht auch zusätzlich durch eine zusätzliche Reinigungsanlage 700 gereinigt werden kann.

Fig. 8 zeigt den Profilabscheider 101 der Fig. 7 in einem zugeklappten Zustand, wodurch der Handgriff 800 sichtbar ist.

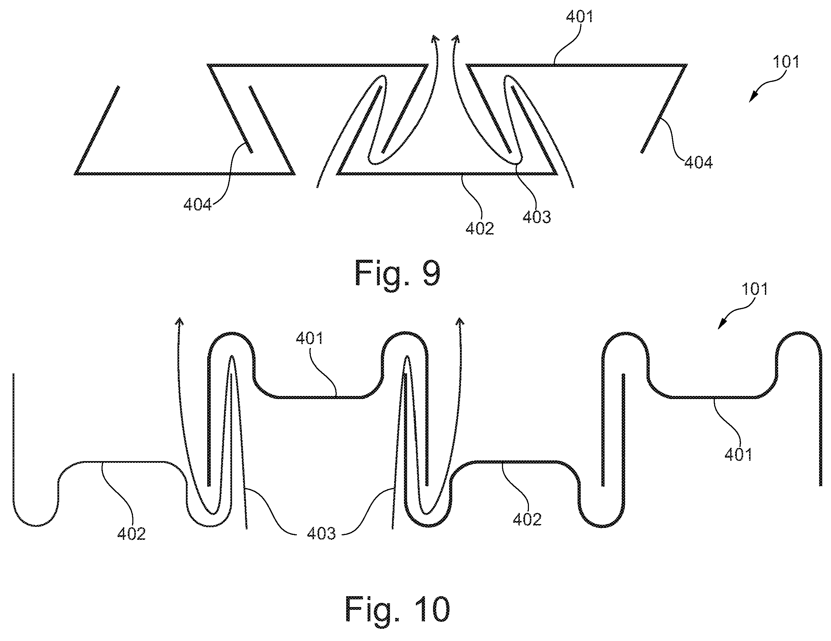

Die zuvor gezeigten Profiloberteile und Profilunterteile waren mit einem U-Profil versehen. Fig. 9 und Fig. 10 hingegen zeigen verschiedene Profilformen, die in dem Profilabscheider gemäß den Ausführungsbeispielen der Erfindung zum Einsatz kommen können. Der in Fig. 9 gezeigte Profilabscheider 101 weist auch mehrere Profiloberteile 401 und mehrere Profilunterteile 402 auf. Diese sind ebenso derart zusammengefügt, dass ein reliefartiger Strömungskanal 403 gebildet wird. Dabei sind die Schenkel 404 der Profiloberteile und Profilunterteile jeweils unter dem gleichen Winkel angeschrägt, wobei dieser Winkel von 90° abweicht.

Fig. 10 hingegen zeigt den Profilabscheider 101, der ebenfalls mehrere Profiloberteile 401 und mehrere Profilunterteile 402 aufweist. Auch hier wird für die Umlenkung der Strömung ein Strömungskanal 403 bereitgestellt, der sowohl im Ausführungsbeispiel der

Fig. 9 als auch im Ausführungsbeispiel der Fig. 10 zweimal eine Richtungsumkehr um mindestens 180° für die Strömung erzwingt.

Dabei ist in diesem und in jedem anderen Ausführungsbeispiel der Erfindung ein Profilabscheider auch als Schikanenabscheider zu bezeichnen, bei dem der Abscheider eine Barriere für die Strömung darstellt, da mehrfach eine Umlenkung der Strömung vollzogen werden muss.

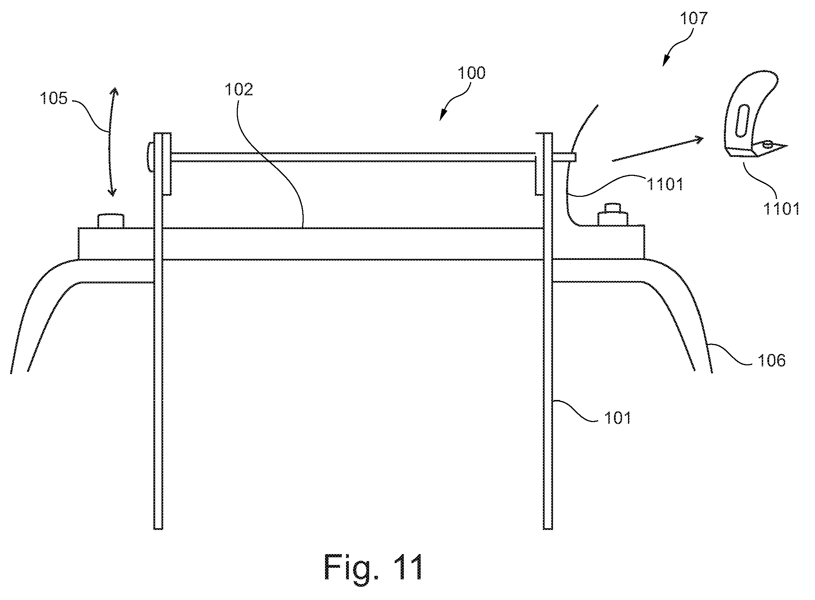

Fig. 11 zeigt ein Vakuumtoilettensystem 107 mit einer Abscheidevorrichtung 100 und einem Abwassersammeltank 106 mit einem Profilabscheider 101 und einer Abscheidevorrichtung 102, die beispielsweise, wie im Vorangegangenen beschrieben, als Matrize ausgeführt sein kann.

Der Profilabscheider lässt sich auch in diesem Ausführungsbeispiel entlang der Achse im Bild nach oben herausziehen, so dass die Relativbewegung 105 durchgeführt werden kann, wodurch mittels Abstreifen an der Abstreifvorrichtung die abgelagerten Teile entfernt werden. Dabei ist im rechten Teil der Fig. 11 die Schnellsicherungsfeder 1101 gezeigt, wobei die Abscheidevorrichtung am Abwassersammeltank angebracht ist.

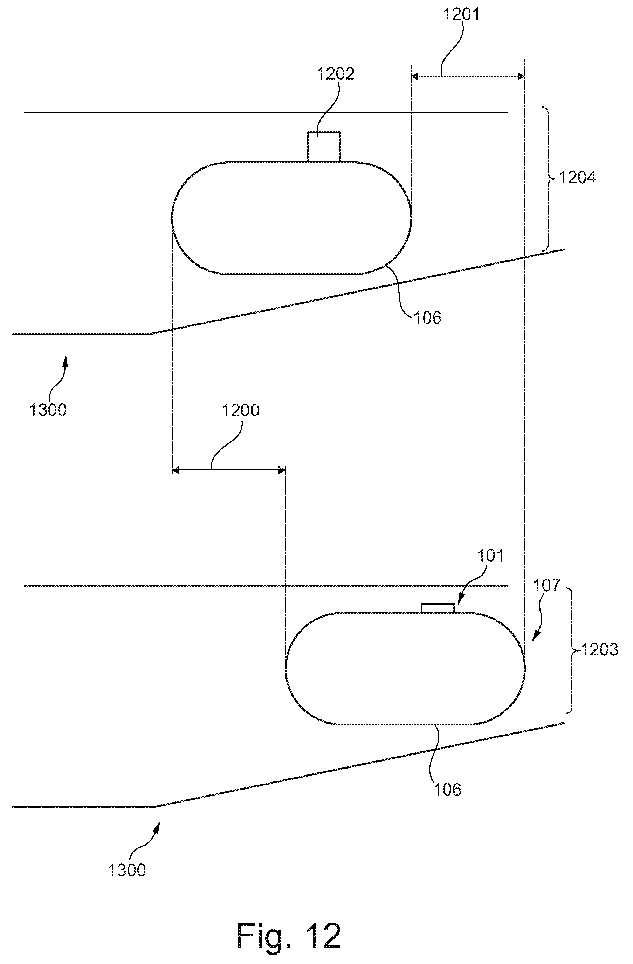

Fig. 12 zeigt im oberen Bereich ein Querschnitt eines Flugzeuges 1300 mit einem Abwassersammeltank 106, der einen Filter 1202 gemäß dem Stand der Technik aufweist

Im unteren Teil der Figur 12 ist ein Querschnitt eines Flugzeuges 1300 gezeigt, das ein Vakuumtoilettensystem 107 gemäß einem Ausführungsbeispiel der Erfindung enthält. Dabei ist eine Abscheidevorrichtung 101 gezeigt. Es ist zu erkennen, dass durch die geringere Höhe 1203, die ein erfindungsgemäßes System 107 im Vergleich zu der Höhe 1204, die der Stand der Technik benötigt ein Raumgewinn 1200 mittels der Erfindung erzielt werden kann. Die erforderliche Höhe kann beispielsweise mittels der vorliegenden Erfindung deshalb verringert werden, weil durch die vereinfachte Reinigung weder Platz zum Montieren und/oder Demontieren von Teilen nötig ist. Normalerweise sind Abwassertanks möglichst weit hinten im Flugzeug untergebracht, an einer Stelle, wo sie den Frachtraum nicht stören. Auf Grund ihrer Größe können sie aber nicht so weit nach hinten verschoben werden, wie es theoretisch möglich wäre. So bleibt zwischen dem hinteren Ende der Abwassertanks und dem sogenannten Druckschott (Ende des Druckrumpfes des Flugzeugs) meistens noch ein Raum, der wegen bescheidener Zugänglichkeit nicht weiter genutzt wird. Wenn die Tanks aber niedriger werden, können wir sie weiter nach hinten schieben, und damit den bisher ungenutzten Raum bis zum Druckschott etwas mehr nutzen, und geben damit vor den Tanks Raum frei, der jetzt z.B. als Frachtraum genutzt werden kann.

Somit ist mittels der vorliegenden Erfindung ein wirtschaftlich nutzbarer Raumgewinn im Flugzeug verbunden.

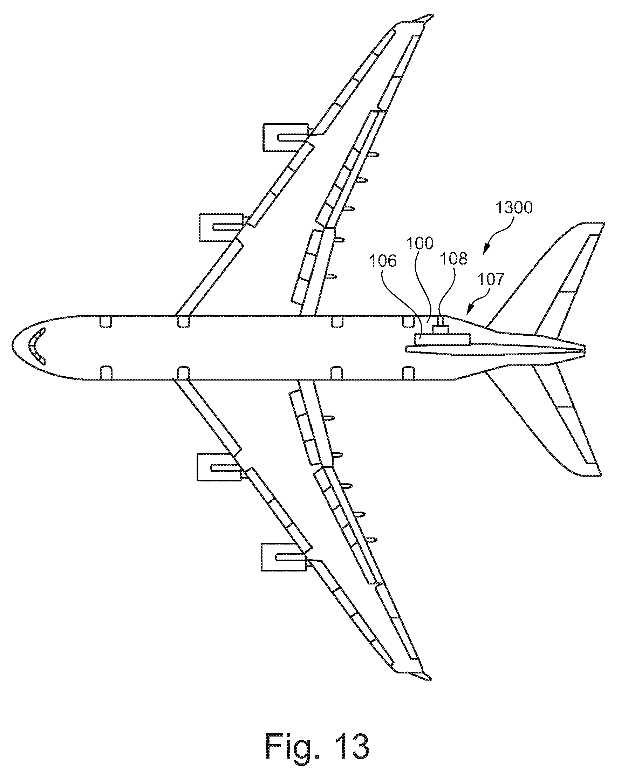

Fig. 13 zeigt ein Flugzeug 1300 gemäß einem weiteren Ausführungsbeispiel der Erfindung mit einem Vakuumtoilettensystem 107, welches einen Abwassertank 106 und eine Abscheidevorrichtung 100 aufweist. Weiterhin ist die Ableitung 108 gezeigt, mit welcher Gas aus dem Abwassersammeltank zur Flugzeughaut geleitet wird und damit an die Umgebungsluft abgegeben werden kann.

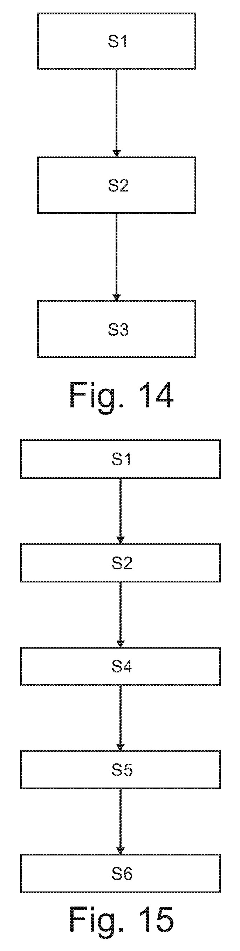

Fig. 14 zeigt ein Flussdiagramm eines Verfahrens zur Reinigung eines Profilabscheiders in einem Vakuumtoilettensystem eines Flugzeuges. Mit einem ersten Schritt S1 wird das Bereitstellen eines Profilabscheiders an einem Abwassersammeltank eines Vakuumtoilettensystems in einem Flugzeug bewerkstelligt. Dabei ist der Profilabscheider zur Trennung von gasförmigen und nicht-gasförmigen Bestandteilen eines Toilettenabwassers im Flugzeug ausgeführt. Mit dem Schritt S2 erfolgt das Bereitstellen einer Abstreifvorrichtung. Anschließend wird eine Relativbewegung zwischen dem Profilabscheider und der Abstreifvorrichtung in Einbauposition des Profilabscheiders und der Abstreifvorrichtung verursacht, wodurch der Profilabscheider durch die Abstreifvorrichtung von an dem Profilabscheider abgelagerten nicht-gasförmigen Bestandteilen befreit wird.

Mit anderen Worten wird aufgrund der Ermöglichung der Relativbewegung zwischen dem Profilabscheider und der Abstreifvorrichtung und dem mechanischen Eingriff zwischen dem Profilabscheider und der Abstreifvorrichtung ein Verfahren bereitgestellt, was eine wesentlich einfachere und schnellere Reinigung eines Profilabscheiders eines Vakuumtoilettensystems in Flugzeugen ermöglicht. Dabei wird eine erhebliche Reduzierung des Wartungsaufwandes erreicht und eine vollständige Eliminierung des Werfwerffilters.

Gemäß einem weiteren Ausführungsbeispiel der Erfindung weist das Verfahren die folgenden weiteren Schritte auf: Entsichern der Abscheidevorrichtung insbesondere des Profilabscheiders, Herausziehen des Profilabscheiders bis zu einem gewissen Anschlag, Hereinschieben des Profilabscheiders bis zu einem weiteren Anschlag, Sichern der Abscheidevorrichtung insbesondere Sichern des Profilabscheiders.

Gemäß dem erfindungsgemäßen Verfahren muss keine V-Schelle mehr gelöst werden, was einen insgesamt geringeren Wartungsaufwand des Vakuumtoilettensystems bedeutet.

Fig. 15 zeigt ein weiteres Flussdiagramm eines Verfahrens gemäß einem weiteren Ausführungsbeispiel der Erfindung. Dabei ist der Verfahrensschritt S3 verursachende Relativbewegung durch die folgenden Verfahrensschritte S4 bis S6 ersetzt. In einem ersten Verfahrensschritt S4 wird der Profilabscheider aus dem Abwassersammeltank herausgezogen. Dabei erfolgt gleichzeitig der Verfahrensschritt S5, bei dem das Abstreifen von abgelagerten nicht-gasförmigen Bestandteilen von dem Profilabscheider durch den mechanischen Kontakt zwischen dem Profilabscheider und der Abstreifvorrichtung erfolgt. Mit dem letzten Verfahrensschritt S6 dieses Ausführungsbeispiels wird der Profilabscheider in den Abwassersammeltank hineingeschoben.

## Patentansprüche

1. Vakuumtoilettensystem (107) für ein Flugzeug, das Vakuumtoilettensystem aufweisend:
eine Abscheidevorrichtung (100), aufweisend:
einen Profilabscheider (101, 101a, 101b),
eine Abstreifvorrichtung (102),
wobei der Profilabscheider zur Trennung von gasförmigen und nicht gasförmigen Bestandteilen (600) eines Toilettenabwassers (104) im Flugzeug ausgeführt ist,
wobei die Abscheidevorrichtung derart ausgeführt ist, dass eine Relativbewegung (105) zwischen dem Profilabscheider und der Abstreifvorrichtung ermöglicht wird, und
wobei durch eine Ausführung der Relativbewegung der Profilabscheider durch die Abstreifvorrichtung von an dem Profilabscheider abgelagerten nicht gasförmigen Bestandteilen befreit wird.

2. Vakuumtoilettensystem gemäß Anspruch 1,
wobei der Profilabscheider Ablagerungsbereiche (400) zur Ablagerung von den nicht gasförmigen Bestandteilen aufweist;
wobei die Abstreifvorrichtung zumindest einen Mitnehmer aufweist, und
wobei während der Relativbewegung ein mechanischer Kontakt zwischen dem Mitnehmer und den Ablagerungsbereichen des Profilabscheiders zur Befreiung des Profilabscheiders von abgelagerten nicht gasförmigen Bestandteilen hergestellt ist.

3. Vakuumtoilettensystem gemäß Anspruch 1 oder 2,
wobei die Abstreifvorrichtung in ihrer Form als Matrize bezüglich des Profilabscheiders ausgeführt ist.

4. Vakuumtoilettensystem gemäß einem der vorherigen Ansprüche,
wobei die Abscheidevorrichtung ein Gehäuse (200) aufweist,
wobei der Profilabscheider und die Abstreifvorrichtung in dem Gehäuse angeordnet sind.

5. Vakuumtoilettensystem gemäß Anspruch 4,
wobei die Abstreifvorrichtung Teil des Gehäuses oder fest mit dem Gehäuse verbunden ist, und
wobei der Profilabscheider verschiebbar gegenüber dem Gehäuse und der Abstreifvorrichtung zur Ausführung der Relativbewegung angeordnet ist.

6. Vakuumtoilettensystem gemäß einem der vorherigen Ansprüche,
wobei der Profilabscheider ein Profiloberteil (401) mit zumindest einer reliefartigen Oberfläche aufweist,
wobei der Profilabscheider ein Profilunterteil (402) mit zumindest einer reliefartigen Oberfläche aufweist, und
wobei das Profiloberteil und Profilunterteil derart zusammengefügt sind, dass zumindest ein reliefartiger Strömungskanal (403) bereitgestellt wird.

7. Vakuumtoilettensystem gemäß Anspruch 6,
wobei das Profiloberteil und das Profilunterteil nur an einem Ende (300) gehaltert sind und an dem gegenüberliegenden Ende (301) frei sind.
wobei das Profiloberteil und das Profilunterteil an dem einen Ende durch eine Drehachse (201) verbunden sind, wodurch das Profiloberteil und das Profilunterteil auf- und zuklappbar angeordnet sind.

8. Vakuumtoilettensystem gemäß Anspruch 7,
wobei die Abscheidevorrichtung derart ausgeführt ist, dass das Profiloberteil und das Profilunterteil mit ihrem freien Ende durch die Abstreifvorrichtung ziehbar sind, wodurch die Relativbewegung ausführbar ist.

9. Vakuumtoilettensystem gemäß einem der vorherigen Ansprüche,
die Abscheidevorrichtung weiterhin aufweisend:
einen Handgriff (800), und
wobei die Abscheidevorrichtung derart ausgeführt ist, dass durch ein Ziehen an dem Handgriff die Relativbewegung zwischen dem Profilabscheider und der Abstreifvorrichtung ausführbar ist.

10. Vakuumtoilettensystem gemäß einem der vorhergehenden Ansprüche, weiterhin aufweisend:
einen Abwassersammeltank (106),
wobei die Abscheidevorrichtung fest an einem Gehäuse des Abwassersammeltanks angebracht ist, und
wobei der Profilabscheider verschiebbar innerhalb der Abscheidevorrichtung angeordnet ist.

11. Vakuumtoilettensystem gemäß einem der vorhergehenden Ansprüche,
wobei der Profilabscheider mittels einer Schnellsicherungsfeder (1101) gegen unbeabsichtigte Bewegung gesichert ist.

12. Verfahren zur Reinigung eines Profilabscheiders in einem Vakuumtoilettensystem eines Flugzeugs, das Verfahren aufweisend die Schritte:
Bereitstellen eines Profilabscheiders (S1) an einem Abwassersammeltank eines Vakuumtoilettensystems in einem Flugzeug,
wobei der Profilabscheider zur Trennung von gasförmigen und nicht gasförmigen Bestandteilen eines Toilettenabwassers im Flugzeug ausgeführt ist,
Bereitstellen einer Abstreifvorrichtung (S2),
Verursachen einer Relativbewegung zwischen dem Profilabscheider und der Abstreifvorrichtung in Einbauposition (S3) des Profilabscheiders und der Abstreifvorrichtung, wodurch der Profilabscheider durch die Abstreifvorrichtung von an dem Profilabscheider abgelagerten nicht gasförmigen Bestandteilen befreit wird.

13. Verfahren gemäß Anspruch 12,
wobei das Verursachen der Relativbewegung durch die folgenden Schritte erfolgt:
Herausziehen des Profilabscheiders aus dem Abwassersammeltank (S4),
Gleichzeitiges Abstreifen von abgelagerten nicht gasförmigen Bestandteilen von dem Profilabscheider durch mechanischen Kontakt zwischen dem Profilabscheider und der Abstreifvorrichtung (S5),
Hineinschieben des Profilabscheiders in den Abwassersammeltank (S6).

14. Verwendung eines Vakuumtoilettensystems gemäß einem der Ansprüche 1 bis 11 in einem Flugzeug (1300).

## Claims

1. A vacuum toilet system (107) for an airplane, the vacuum toilet system comprising:
a separator device (100), comprising:
a profile separator (101, 101a, 101b),
a scraper device (102),
wherein the profile separator is designed for the separation of gaseous and non-gaseous components (600) of a toilet wastewater (104) inside the airplane,
wherein the separating device is designed such that a relative movement (105) is enabled between the profile separator and the scraper device, and
wherein through an execution of the relative movement of the profile separator the scraper device is freed from the non-gaseous ingredients deposited on the profile separator.

2. Vacuum toilet system according to claim 1,
wherein the profile separator comprises deposit areas (400) for the deposit of the gaseous components;
wherein the scraper device comprises at least one carrier, and
wherein during the relative movement, a mechanical contact between the carrier and the deposition areas of the profile separator for the liberation of the profile separators from deposited non-gaseous components is provided.

3. Vacuum toilet system according to claim 1 or 2,
wherein the scraping device is designed in its form as a die with respect to the profile separators.

4. Vacuum toilet system according to one of the preceding claims,
wherein the separator comprises a housing (200),
wherein the profile separator and the scraping device are arranged in the housing.

5. Vacuum toilet system according to claim 4,
wherein the scraper device is a part of the housing or is connected to the housing, and
wherein the profile separator is set out to be shiftable with regards to the housing and the scraper device in order to perform the relative movement.

6. Vacuum toilet system according to one of the preceding claims,
wherein the profile separator comprises a profile upper part (401) having at least one relief-like surface,
wherein the profile separator comprises a profile lower part (402) with at least one relief-like surface, and
wherein the profile upper part and the profile lower part are joined together such that at least one relief-like flow channel (403) is provided.

7. Vacuum toilet system according to claim 6,
wherein the profile upper part and the profile lower part are supported only at one end (300) and are free at the opposite end (301).
wherein the profile upper part and the profile lower part are connected by an axis of rotation (201) at the one end, whereby it is possible to flip the profile of the upper part and the profile bottom open and closed.

8. Vacuum toilet system according to claim 7,
wherein the separating device is designed in a way such that the profile upper part and the profile lower part can be pulled by its free end through the scraper device, whereby it is possible to perform the relative movement.

9. Vacuum toilet system according to one of the preceding claims,
the separator further comprising:
a handle (800), and
wherein the separator is configured such that by pulling on the handle the relative movement between the scraper device and the profile separator is executable.

10. Vacuum toilet system according to one of the preceding claims, further comprising:
a waste water collection tank (106),
wherein the separator is attached fix to a housing of the waste water collection tanks, and
wherein the profile separator is set out to be adjustable within the separation device.

11. Vacuum toilet system according to one of the preceding claims,
wherein the profile separator is secured by means of a quick securing spring (1101) against inadvertent movement.

12. A method for cleaning a profile separator in a vacuum toilet system of an airplane, the method comprising the steps of:
providing a profile separators (S1) in a waste water collection tank of a vacuum toilet system in an airplane, wherein the profile separator is carried out for the separation of gaseous and non-gaseous ingredients in a toilet waste water collection tank in an airplane,
providing a scraper device (S2) causing of a relative movement between the profile separator and the scraper device in a mounting position (S3) of the profile separator and the scraper device, whereby the profile separator is ridded of the non-gaseous ingredients deposited on the profile separator through the scraper device.

13. Method according to claim 12, wherein the relative movement is caused by the following steps:
pulling the profile separators out of the waste water collection tank (S4),
simultaneous freeing of non-gaseous constituents deposited on the profile separator through mechanical contact between the profile separator and the scraper device (S5),
pushing the profile separator into the waste water collection tank (S6).

14. Use of a vacuum toilet system according to one of claims 1 to 11 in an airplane (1300).

## Revendications

1. Système de toilettes sous vide (107) destiné à un avion, le système de toilettes sous vide comprenant :
un dispositif de séparation (100), qui comporte :
un séparateur à profilés (101, 101a, 101b),
un dispositif de raclage (102),
dans lequel le séparateur à profilés est réalisé pour séparer des constituants (600) gazeux et non gazeux des eaux usées de toilettes (104) dans l'avion,
dans lequel le dispositif de séparation est réalisé de telle manière qu'un mouvement relatif (105) entre le séparateur à profilés et le dispositif de raclage est permis, et
dans lequel une exécution du mouvement relatif permet au dispositif de raclage de libérer le séparateur à profilés de constituants non gazeux déposés sur le séparateur à profilés.

2. Système de toilettes sous vide selon la revendication 1, dans lequel le séparateur à profilés comporte des zones de dépôt (400) destinées au dépôt des constituants non gazeux ;
dans lequel le dispositif de raclage comporte au moins un élément d'entraînement, et
dans lequel, pendant le mouvement relatif, un contact mécanique entre l'élément d'entraînement et les zones de dépôt du séparateur à profilés est établi pour libérer le séparateur à profilés de constituants non gazeux déposés.

3. Système de toilettes sous vide selon la revendication 1 ou 2,
dans lequel le dispositif de raclage est réalisé en ce qui concerne sa forme en tant que matrice par rapport au séparateur à profilés.

4. Système de toilettes sous vide selon l'une des revendications précédentes,
dans lequel le dispositif de séparation comporte un boîtier (200),
dans lequel le séparateur à profilés et le dispositif de raclage sont disposés dans le boîtier.

5. Système de toilettes sous vide selon la revendication 4, dans lequel le dispositif de raclage fait partie du boîtier ou est relié solidement au boîtier, et
dans lequel le séparateur à profilés est disposé de manière mobile par rapport au boîtier et au dispositif de raclage pour exécuter le mouvement relatif.

6. Système de toilettes sous vide selon l'une des revendications précédentes,
dans lequel le séparateur à profilés comporte une partie supérieure profilée (401) dotée d'au moins une surface en relief,
dans lequel le séparateur à profilés comporte une partie inférieure profilée (402) dotée d'au moins une surface en relief, et
dans lequel la partie supérieure profilée et la partie inférieure profilée sont assemblées de manière à obtenir au moins un canal d'écoulement en relief (403).

7. Système de toilettes sous vide selon la revendication 6, dans lequel la partie supérieure profilée et la partie inférieure profilée sont maintenues uniquement à une extrémité (300) et sont libres à l'extrémité opposée (301),
dans lequel la partie supérieure profilée et la partie inférieure profilée sont reliées à ladite extrémité par un axe de rotation (201), moyennant quoi la partie supérieure profilée et la partie inférieure profilée sont disposées de manière à pouvoir être ouvertes et fermées par rabattement.

8. Système de toilettes sous vide selon la revendication 7, dans lequel le dispositif de séparation est réalisé de telle manière que la partie supérieure profilée et la partie inférieure profilée peuvent être tirées par leur extrémité libre à travers le dispositif de raclage, moyennant quoi le mouvement relatif peut être exécuté.

9. Système de toilettes sous vide selon l'une des revendications précédentes, le dispositif de séparation comportant en outre :
une poignée (800), et
dans lequel le dispositif de séparation est réalisé de telle manière que, en tirant sur la poignée, le mouvement relatif entre le séparateur à profilés et le dispositif de raclage peut être exécuté.

10. Système de toilettes sous vide selon l'une des revendications précédentes, comprenant en outre :
un réservoir de collecte d'eaux usées (106),
dans lequel le dispositif de séparation est monté fixement sur un boîtier du réservoir de collecte d'eaux usées, et
dans lequel le séparateur à profilés est disposé de manière mobile à l'intérieur du dispositif de séparation.

11. Système de toilettes sous vide selon l'une des revendications précédentes,
dans lequel le séparateur à profilés est protégé contre un mouvement involontaire au moyen d'un ressort de blocage rapide (1101).

12. Procédé de nettoyage d'un séparateur à profilés dans un système de toilettes sous vide d'un avion, le procédé comprenant les étapes consistant à :
fournir un séparateur à profilés (S1) sur un réservoir de collecte d'eaux usées d'un système de toilettes sous vide dans un avion,
dans lequel le séparateur à profilés est réalisé pour séparer des constituants gazeux et non gazeux d'eaux usées de toilettes dans l'avion,
fournir un dispositif de raclage (S2),
provoquer un mouvement relatif entre le séparateur à profilés et le dispositif de raclage dans la position de montage (S3) du séparateur à profilés et du dispositif de raclage, moyennant quoi le séparateur à profilés est libéré par le dispositif de raclage de constituants non gazeux déposés sur le séparateur à profilés.

13. Procédé selon la revendication 12,
dans lequel le mouvement relatif est provoqué par les étapes suivantes consistant à :
extraire le séparateur à profilés du réservoir de collecte d'eaux usées (S4),
racler simultanément des constituants non gazeux déposés du séparateur à profilés par contact mécanique entre le séparateur à profilés et le dispositif de raclage (S5),
pousser le séparateur à profilés dans le réservoir de collecte d'eaux usées (S6).

14. Utilisation d'un système de toilettes sous vide selon l'une des revendications 1 à 11 dans un avion (1300).
